# EUROPEAN PATENT APPLICATION

(11) **EP 1 650 237 A1**
(43) Date of publication of application: **26.04.2006**
(21) Application number: 04748243.5
(22) Date of filing: 29.07.2004
(51) Int. Cl.: C08F 236/12, C08L 9/04, C08F 2/22, B29C 41/14

(54) **DIPPING COPOLYMER LATEX**

(30) Priority: 31.07.2003 JP 2003283857
(71) Applicant: ZEON CORPORATION, Tokyo 100-8323 (JP)
(72) Inventor: OTA, Hisanori, ZEON CORPORATION, Tokyo 100-8323 (JP); AIHARA, Shunjin, ZEON CORPORATION, Tokyo 100-8323 (JP)
(74) Representative: Albrecht, Thomas
(86) International application number: PCT/JP2004/011194
(87) International publication number: WO 2005/012375

(57) **Abstract**

There are provided a dip-molded product that has good resistance to organic solvents, good feeling, sufficient tensile strength, and high contact-state-sustaining performance, a dip-molding composition for forming the dip-molded product, and a dip-molding copolymer latex that can suitably be used for the dip-molding composition. The copolymer latex is a carboxylated acrylonitrile-butadiene copolymer latex that is produced by copolymerization of a monomer mixture of a specific composition comprising 1,3-butadiene, acrylonitrile and methacrylic acid, in which a part of the total amount of the acrylonitrile and a part of the total amount of the methacrylic acid are added to the polymerization reaction system at a specific time after the initiation of the polymerization and the content of methyl ethyl ketone-insoluble components in the resulting polymer is in a specific range. The dip-molding composition comprises the latex, a vulcanizing agent and a vulcanization accelerator.

## Description

### Technical Field

The invention relates to a copolymer latex for use in dip molding, a composition for use in dip molding and a dip-molded product. More specifically, the invention relates to a dip-molded product that has good resistance to organic solvents, good feeling, sufficient tensile strength, and high contact-state-sustaining performance, a dip-molding composition for forming the dip-molded product, and a dip-molding copolymer latex for use in the dip-molding composition.

### Background Art

Rubber gloves are widely used in housework, various industries such as food processing industries and electronic parts manufacturing industries, and medical care (particularly surgery). The rubber gloves should meet some requirements, for example, as follows. Their expansion and contraction should easily follow the movement of the fingers with a small force so as not to fatigue the hand even in long-time use (namely they should have good feeling). They should be resistant to being broken during use (namely they should have sufficiently high tensile strength). Even when they are deformed in response to the movement of the fingers, they should cause little slack or wrinkle and maintain the contact state (namely they should have high contact-state-sustaining performance).

Conventionally, rubber gloves produced by dip molding of natural rubber latex are frequently used. Such natural rubber latex gloves, however, can cause allergies in some users because of a trace amount of proteins in the rubber components. Thus, there have been proposed gloves produced with synthetic rubber latex without such a defect, such as acrylonitrile- butadiene copolymer latex.

For example, U.S. Patent No. 5, 014, 362 discloses a glove that is produced by dip molding of a composition comprising carboxylated acrylonitrile-butadiene copolymer latex, a small amount of zinc oxide, sulfur, and a vulcanization accelerator and is characterized in that when it is extended by 100%, the ratio of the stress 6 minutes after its 100% extension to the stress immediately after its 100% extension (the stress retention rate) is substantially zero. Such a glove has good feeling but poor contact-state-sustaining performance. International Patent Publication No. WO97/48765 discloses a glove produced by dip molding of a zinc oxide-free composition comprising carboxylated acrylonitrile-butadiene copolymer latex, ammonium casein, sulfur, and a vulcanization accelerator. Such a glove is insufficient in feeling or contact-state-sustaining performance. International Patent Publication No. WO00/21451 discloses a glove that is produced by dip molding of a composition comprising acrylonitrile-butadiene copolymer latex containing a specific amount of a carboxyl group, a small amount of zinc oxide, sulfur, and a vulcanization accelerator and has a stress retention rate in the range from 50 to 70%. Such a glove has high contact-state-sustaining performance but can have a poor balance of feeling and tensile strength.

In addition, the gloves produced with the carboxylated acrylonitrile-butadiene copolymer latex can be insufficient in resistance to organic solvents.

### Disclosure of Invention

In light of the foregoing, it is an object of the invention to provide a dip-moldedproduct that has good resistance to organic solvents, good feeling, sufficient tensile strength, and high contact-state-sustaining performance, a dip-molding composition for forming the dip-molded product, and a dip-molding copolymer latex for use in the dip-molding composition.

In order to solve the above problems, the present inventors have made active investigations and consequently found that the above object can be achieved by the use of a carboxylated acrylonitrile-butadiene copolymer latex comprising a copolymer that has a high content of methyl ethyl ketone-insoluble components and is produced by copolymerization of a monomer mixture containing 1,3-butadiene, acrylonitrile and methacrylic acid, in which a part of the acrylonitrile and a part of the methacrylic acid are added to the polymerization system during the process after the initiation of the polymerization. Based on the finding, the present inventors have completed the invention.

Thus, according to the invention, there is provided a dip-molding copolymer latex that satisfies the conditions (1) to (3) below.
(1) The copolymer is produced by copolymerization of 100 parts by weight of a monomer mixture (A) comprising 45 to 85 parts by weight of a conjugated diene monomer, 10 to 40 parts by weight of an ethylenic unsaturated nitrile monomer, 5 to 15 parts by weight of an ethylenic unsaturated acid monomer, and 0 to 20 parts by weight of any other ethylenic unsaturated monomer copolymerizable therewith;
(2) The content of the methyl ethyl ketone-insoluble components in the copolymer is from 60 to 95% by weight;
(3) The copolymer is produced by the following processes of:
   (I) initiating a copolymerization reaction using a monomer mixture (a) comprising at least 80% by weight of the total amount of the conjugated diene monomer, 50 to 90% by weight of the total amount of the ethylenic unsaturated nitrile monomer, 40 to 90% by weight of the total amount of the ethylenic unsaturated acid monomer, and at least 80% by weight of the total amount of the other ethylenic unsaturated monomer with respect to the respective components of the monomer mixture (A);
   (II) adding the remainder of the ethylenic unsaturated nitrile monomer and the remainder of the ethylenic unsaturated acid monomer when the degree of polymerization conversion of the monomer mixture (a) is in the range from 5 to 95% by weight, wherein the remainders are part of the monomer mixture (A) but not included in the monomer mixture (a); and
   (III) also performing and completing addition of the remainder of the conjugated diene monomer and the remainder of the other ethylenic unsaturated monomer copolymerizable therewith by the time that the polymerization reaction is stopped.

According to the invention, there is also provided a dip-molding composition comprising the above dip-molding copolymer latex, a vulcanizing agent and a vulcanization accelerator.

According to the invention, there is also provided a dip-molded product that is produced by dip molding of the above dip-molding composition.

Also provided is a dip-molding latex produced by copolymerization of 100 parts by weight of a monomer mixture comprising 45 to 85 parts by weight of a conjugated diene monomer, 10 to 40 parts by weight of an ethylenic unsaturated nitrile monomer, 5 to 15 parts by weight of an ethylenic unsaturated acid monomer, and 0 to 20 parts by weight of any other ethylenic unsaturated monomer copolymerizable therewith,wherein the latex is produced by a copolymerization process including: initiating a copolymerization reaction using a monomer mixture that comprises a part of the total amounts of the components for use in the polymerization and includes at least 80% by weight of the total amount of the conjugated diene monomer, 50 to 90% by weight of the total amount of the ethylenic unsaturated nitrile monomer, 40 to 90% by weight of the total amount of the ethylenic unsaturated acid monomer, and at least 80% by weight of the total amount of the other ethylenic unsaturated monomer copolymerizable therewith; then adding the remainder of the ethylenic unsaturated nitrile monomer and the remainder of the ethylenic unsaturated acid monomer when the degree of polymerization conversion of the total of the monomers in the polymerization reaction system is in the range from 5 to 95% by weight; and also adding the remainder of the conjugated diene monomer and the remainder of the other ethylenic unsaturated monomer copolymerizable therewith and completing such addition by the time that the polymerization reaction is stopped, and wherein the content of methyl ethyl ketone-insoluble components in the resulting copolymer is from 60 to 95% by weight.

According to the invention, there are provided a dip-molded product that can have good resistance to organic solvents, good feeling, sufficient tensile strength, and high contact-state-sustaining performance, a dip-molding composition for forming such a dip-molded product, and a dip-molding copolymer latex that can suitably be used for such a dip-molding composition.

### Best Mode for Carrying Out the Invention

The invention is described in detail below.

According to the invention, the copolymer latex for use in dip molding is produced by copolymerization of 100 parts by weight of a monomer mixture comprising 45 to 85 parts by weight of a conjugated diene monomer, 10 to 40 parts by weight of an ethylenic unsaturated nitrile monomer, 5 to 15 parts by weight of an ethylenic unsaturated acid monomer, and 0 to 20 parts by weight of any other ethylenic unsaturated monomer copolymerizable therewith, wherein the latex is produced by a copolymerization process including: initiating a copolymerization reaction using a monomer mixture that comprises a part of the total amounts of the components for use in the polymerization and includes at least 80% by weight of the total amount of the conjugated diene monomer, 50 to 90% by weight of the total amount of the ethylenic unsaturated nitrile monomer, 40 to 90% by weight of the total amount of the ethylenic unsaturated acid monomer, and at least 80% by weight of the total amount of the other ethylenic unsaturated monomer copolymerizable therewith; then adding the remainder of the ethylenic unsaturated nitrile monomer and the remainder of the ethylenic unsaturated acid monomer when the degree of polymerization conversion of the total of the monomers in the polymerization reaction system is in the range from 5 to 95% by weight; and also adding the remainder of the conjugated diene monomer and the remainder of the other ethylenic unsaturated monomer copolymerizable therewith and completing such addition by the time that the polymerization reaction is stopped, and wherein the content of methyl ethyl ketone-insoluble components in the resulting copolymer is from 60 to 95% by weight.

Examples of the conjugated diene monomer include 1,3-butadiene, isoprene, 2,3-dimethyl-1,3-butadiene, 2-ethyl-1,3-butadiene, 1,3-pentadiene, and chloroprene. Preferred are 1,3-butadiene and isoprene; More preferred is 1,3-butadiene. One of these conjugated diene monomers may be used alone, or two or more of these conjugated diene monomers may be used in combination.

Based on 100 parts by weight of the total of the monomers, 45 to 85 parts by weight, preferably 58 to 75 parts by weight of the conjugated diene monomer may be used. If this amount is too small, the resulting feeling can be poor. If this amount is too large, the resulting tensile strength and resistance to organic solvents can be poor.

Examples of the ethylenic unsaturated nitrile monomer include acrylonitrile, methacrylonitrile, fumaronitrile, α-chloroacrylonitrile, and α-cyanoethyl acrylonitrile. Preferred are acrylonitrile and methacrylonitrile; More preferred is acrylonitrile. One of these ethylenic unsaturated nitrile monomers may be used alone, or two or more of these ethylenic unsaturated nitrile monomers may be used in combination.

Based on 100 parts by weight of the total of the monomers, 10 to 40 parts by weight, preferably 18 to 30 parts by weight of the ethylenic unsaturated nitrile monomer may be used. If this amount is too small, the resulting tensile strength and resistance to organic solvents can be poor. If this amount is too large, the resulting feeling can be poor.

The ethylenic unsaturated acid monomer may be any ethylenic unsaturated monomer having an acid group such as a carboxyl group, a sulfonic acid group, and an acid anhydride group. Examples of the ethylenic unsaturated acid monomer include an ethylenic unsaturated monocarboxylic acid monomer such as acrylic acid and methacrylic acid; an ethylenic unsaturated polycarboxylic acid monomer such as itaconic acid, maleic acid, and fumaric acid; an ethylenic unsaturated polycarboxylic acid anhydride such as maleic anhydride and citraconic anhydride; an ethylenic unsaturated sulfonic acid monomer such as styrenesulfonic acid; and a monomer of a partial ester of an ethylenic unsaturated polycarboxylic acid, such as monobutyl fumarate, monobutyl maleate, mono-2-hydroxypropyl maleate. The ethylenic unsaturated carboxylic acid is preferred, the ethylenic unsaturated monocarboxylic acid is more preferred, and methacrylic acid is particularly preferred. Such ethylenic unsaturated acid monomers may be used in the forms of an alkali metal salt or an ammonium salt. One of these ethylenic unsaturated acid monomers may be used alone, or two or more of these ethylenic unsaturated acid monomers may be used in combination.

Based on 100 parts by weight of the total of the monomers, 5 to 15 parts by weight, preferably 7 to 12 parts by weight of the ethylenic unsaturated acid monomer may be used. If this amount is too small, the resulting tensile strength can be poor. If this amount is too large, the resulting feeling and contact-state-sustaining performance can be poor.

Examples of the other ethylenic unsaturated monomer copolymerizable therewith include a vinyl aromatic monomer such as styrene, alkylstyrene and vinylnaphthalene; fluoroalkylvinyl ether such as fluoroethyl vinyl ether; an ethylenic unsaturated amide monomer such as (meth)acrylamide, N-methylol (meth)acrylamide, N,N-dimethylol (meth)acrylamide, N-methoxymethyl (meth)acrylamide, and N-propoxymethyl (meth)acrylamide; an ethylenic unsaturated carboxylate ester monomer such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, dibutyl maleate, dibutyl fumarate, diethyl maleate, methoxymethyl (meth)acrylate, ethoxyethyl (meth)acrylate, methoxyethoxyethyl (meth)acrylate, cyanomethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, and dimethylaminoethyl (meth)acrylate; and a crosslinking monomer such as divinylbenzene, polyethylene glycol di(meth)acrylate, polypropylene glycol di(meth)acrylate, trimethylolpropane tri(meth)acrylate, and pentaerythritol tetra(meth)acrylate. One of these ethylenic unsaturated monomers may be used alone, or two or more of these ethylenic unsaturated monomers may be used in combination.

Based on 100 parts by weight of the total of the monomers, at most 20 parts by weight, preferably at most 10 parts by weight of the other ethylenic unsaturated monomers may be used. If this amount is too large, the resulting balance of feeling and tensile strength can be poor.

The dip-molding copolymer latex of the invention is produced by copolymerization, preferably emulsion copolymerization, of the monomer mixture. The copolymers may be produced through the process below.

In the copolymerization of 100 parts by weight of the monomer mixture, the polymerization is first initiated using a monomer mixture that comprises a part of the total amounts of the components for use in the polymerization and includes at least 80% by weight of the total amount of the conjugated diene monomer, 50 to 90% by weight of the total amount of the ethylenic unsaturated nitrile monomer, 40 to 90% by weight of the total amount of the ethylenic unsaturated acid monomer, and at least 80% by weight of the total amount of the other ethylenic unsaturated monomer copolymerizable therewith (Process I). The remainder of the ethylenic unsaturated nitrile monomer and the remainder of the ethylenic unsaturated acidmonomer are then added, when the degree of polymerization conversion of the total of the monomers in the polymerization reaction system is in the range from 5 to 95% by weight (Process II), and addition of the remainder of the conjugated diene monomer and the remainder of the other ethylenic unsaturated monomer copolymerizable therewith is also performed and completed by the time that the polymerization reaction is stopped (Process III) . These processes are essential.

In the above copolymerization method, 50 to 90% by weight, preferably 55 to 85% by weight, more preferably 60 to 85% by weight of the total amount of the ethylenic unsaturated nitrile monomer for use in the polymerization is added to a polymerization reaction vessel, when the polymerization is initiated. Thereafter, the remainder of the ethylenic unsaturated nitrile monomer is added to the polymerization reaction system.

If the percentage of the ethylenic unsaturated nitrile monomer added to the polymerization reaction vessel is too low, the resulting tensile strength can be poor; if too high, the resulting feeling and tensile strength can be poor.

In addition, the remainder of the ethylenic unsaturated nitrile monomer is added to the polymerization reaction system, when the degree of polymerization conversion of the total of the monomers in the polymerization reaction system is in the range from 5 to 95% by weight, more preferably from 10 to 90% by weight, particularly preferably from 20 to 90% by weight. If the degree of polymerization conversion is too low, the resulting feeling and tensile strength can be poor; if too high, the resulting tensile strength can be poor.

The remainder of the ethylenic unsaturated nitrile monomer may also be added, when the degree of polymerization conversion of the ethylenic unsaturated nitrile monomer in the polymerization reaction system is preferably in the range from 40 to 95% by weight, more preferably from 45 to 92% by weight, particularly preferably from 45 to 85% by weight. If the addition is performed in such a range, a further improvement in tensile strength can be achieved.

The remainder of the ethylenic unsaturated nitrile monomer may be added at a time or in parts to the polymerization reaction system. In the case where the remainder of the ethylenic unsaturated nitrile monomer is added in parts, the remainder may be divided into equal parts or into parts of varying amounts, depending on the number of the separate additions to the polymerization reaction system. The number of times the remainder is divided may also be infinite, that is, a continuous addition method may be used.

In the above copolymerization method, 40 to 90% by weight, preferably 50 to 85% by weight, more preferably 60 to 80% by weight of the total amount of the ethylenic unsaturated acid monomer for use in the polymerization is added to the polymerization reaction vessel, when the polymerization is initiated. Thereafter, the remainder of the ethylenic unsaturated acid monomer is added to the polymerization reaction system.

I f the percentage of the ethylenic unsaturated acid monomer added to the polymerization reaction vessel is too low, the resulting tensile strength and contact-state-sustaining performance can be poor; if too high, the resulting feeling and tensile strength can be poor.

The remainder of the ethylenic unsaturated acid monomer is added to the polymerization reaction system, when the degree of polymerization conversion of the total of the monomers in the polymerization reaction system is in the range from 5 to 95% by weight, preferably from 10 to 90% by weight, more preferably from 20 to 80% by weight, particularly preferably from 40 to 70% by weight. The addition in such a range can lead to a further improvement in the balance of tensile strength, feeling and contact state.

For example, the remainder of the ethylenic unsaturated acid monomer may be added at a time, in parts or continuously. In particular, the addition is preferably performed at a time.

When the polymerization is initiated, preferably at least 80% by weight, more preferably at least 90% by weight of the total amount of the conjugated diene monomer for use in the polymerization is added to the polymerization reaction vessel. Thereafter, addition of the remainder of the conjugated diene monomer is performed and completed by the time that the polymerization reaction is stopped. It is particularly preferred that the total amount of the conjugated diene monomer for use in the polymerization should be added to the polymerization reaction vessel, when the polymerization is initiated.

Concerning the other ethylenic unsaturated monomer copolymerizable with the conjugated diene monomer, the ethylenic unsaturated nitrile monomer and the ethylenic unsaturated acid monomer, preferably at least 80% by weight, more preferably at least 90% by weight of the total amount of the other ethylenic unsaturated monomer for use in the polymerization is added to the polymerization reaction vessel, when the polymerization is initiated. Thereafter, addition of the remainder of the other ethylenic unsaturated monomer is performed and completed by the time that the polymerization reaction is stopped. It is particularly preferred that the total amount of the other ethylenic unsaturated monomer for use in the polymerization should be added to the polymerization reaction vessel, when the polymerization is initiated.

Any conventional method may be used for the copolymerization except the method of adding the monomers. In the case of emulsion copolymerization, for example, the monomer mixture may be copolymerized using a polymerization initiator in the presence of water and an emulsifying agent, and the polymerization reaction may be stopped at a specific degree of polymerization conversion by addition of a polymerization terminator.

Examples of the emulsifying agent include, but are not limited to, a nonionic emulsifier such as polyoxyethylene alkyl ether, polyoxyethylene alkylphenol ether, polyoxyethylene alkyl ester, and polyoxyethylene sorbitan alkylester; an anionic emulsifier such as a salt of a fatty acid such as myristic acid, palmitic acid, oleic acid, and linolenic acid, an alkylbenzenesulfonate such as sodium dodecylbenzenesulfonate, a salt of a higher alcohol sulfate, and an alkylsulfosuccinate; a cationic emulsifier such as alkyltrimethylammonium chloride, dialkylammonium chloride and benzylammonium chloride; and a copolymerizable emulsifier such as a sulfo-ester of an α, β-unsaturated carboxylic acid, a sulfate ester of an α, β-unsaturated carboxylic acid, and sulfoalkyl aryl ether. In particular, the anionic emulsifier is preferably used. One of these emulsifying agents may be used alone, or two or more of these emulsifying agents may be used in combination. Based on 100 parts by weight of the monomer mixture, 0.1 to 10 parts by weight of the emulsifying agent may be used.

Based on 100 parts by weight of the monomer mixture, 80 to 500 parts by weight, preferably 100 to 300 parts by weight of water may be used.

Examples of the polymerization initiator include, but are not limited to, an inorganic peroxide such as sodium persulfate, potassium persulfate, ammonium persulfate, potassium superphosphate, and hydrogen peroxide; an organic peroxide such as diisopropylbenzene hydroperoxide, cumene hydroperoxide, tert-butyl hydroperoxide, 1,1,3,3-tetramethylbutyl hydroperoxide, 2,5-dimethylhexane-2,5-dihydroperoxide, di-tert-butylperoxide, di-α-cumylperoxide, acetylperoxide, isobutyryl peroxide, and benzoyl peroxide; and an azo compound such as azobisisobutylonitrile, azobis-2,4-dimethylvaleronitrile, and methyl azobisisobutyrate. One of these polymerization initiators may be used alone, or two or more of these polymerization initiators may be used in combination. The peroxide initiator is preferably used, because it can contribute to stable production of the latex and can provide a high-tensile-strength, soft-feeling, dip-molded product. Based on 100 parts by weight of the monomer mixture, 0.01 to 1.0 part by weight of the polymerization initiator is preferably used.

The peroxide initiator may also be used as a redox system polymerization initiator in combination with a reducing agent. Examples of such a reducing agent include, but are not limited to, a compound that contains a metal ion in a reduction state, such as ferrous sulfate and cuprous naphthenate; a compound of sulfonic acid, such as sodium methanesulfonate; and an amine compound such as dimethylaniline. One of these reducing agents may be used alone, or two or more of these reducing agents may be used in combination. Based on 1 part by weight of the peroxide, 0.03 to 10 parts by weight of the reducing agent is preferably used.

The dip-molding copolymer latex of the invention, which is produced by copolymerization of the monomer mixture as described above, essentially contains 60 to 95% by weight of methyl ethyl ketone-insoluble components (also abbreviated as "MEK-insoluble components"). The content of the MEK-insoluble components is preferably from 70 to 90% by weight. If the content of the MEK-insoluble components is too low, the resulting dip-molded product can have low resistance to organic solvents and poor contact-state-sustaining performance. If the content is too high, the resulting dip-molded product can have poor feeling and low tensile strength.

In the invention, an appropriate amount of a molecular weight modifier is preferably used to adjust the content of the MEK-insoluble components in the dip-molding copolymer latex.

Examples of the molecular weight modifier include mercaptans such as n-butyl mercaptan, n-dodecyl mercaptan and tert-dodecyl mercaptan; sulfides such as tetraethylthiuram sulfide and dipentamethylenethiuram haxasulfide; α-methylstyrene dimer; and carbon tetrachloride. In particular, mercaptans are preferred, and tert-dodecyl mercaptan is more preferred. One of them may be used alone, or two or more of them may be used in combination.

The addition amount of the molecular weight modifier may be determined such that the content of the MEK-insoluble components in the copolymer can be in the desired range and may preferably be from 0. 05 to 0.5 parts by weight, more preferably from 0.1 to 0.4 parts by weight, based on 100 parts by weight of the monomer mixture.

Examples of the polymerization terminator include hydroxylamine, hydroxylamine sulfate, diethylhydroxylamine, hydroxylaminesulfonic acid and an alkali metal salt thereof, sodium dimethyldithiocarbamate, hydroquinone derivatives, catechol derivatives, and an aromatic hydroxydithiocarboxylic acid such as hydroxydimethylbenzenethiocarboxylic acid, hydroxydiethylbenzenedithiocarboxylic acid and hydroxydibutylbenzenedithiocarboxylic acid, and alkali metal salts thereof. The addition amount of the polymerization terminator is generally, but not limited to, from 0.1 to 2 parts by weight, based on 100 parts by weight of the total of the monomers.

In the emulsion copolymerization, if desired, an auxiliary material may be used such as a particle size-adjusting agent, a chelating agent and an enzyme scavenger.

The polymerization temperature is generally, but not limited to, from 0 to 95°C, preferably from 35 to 70°C.

The degree of polymerization conversion at the time of stopping the polymerization reaction is preferably at least 90% by weight, more preferably at least 93% by weight.

After the polymerization reaction is stopped, if desired, the unreacted monomers may be removed, or the solids content or pH may be adjusted, when the latex is obtained.

If desired, an age resistor or antioxidant, a preservative, an antimicrobial agent, a dispersing agent, or the like may be added to the latex.

The number average particle diameter of the latex is preferably from 60 to 300 nm, more preferably from 80 to 150 nm. The particle diameter may be adjusted to the desired value by a method of adjusting the addition amount of the emulsifying agent and the polymerization initiator or any other method.

The dip-molding composition of the invention may comprise the dip-molding copolymer latex as described above, a vulcanizing agent and a vulcanization accelerator.

Applicable examples of the vulcanizing agent include those conventionally used for dip molding, such as sulfur including sulfur powder, flowers of sulfur, precipitated sulfur, colloidal sulfur, surface-treated sulfur, and insoluble sulfur; and polyamines such as hexamethylenediamine, triethylenetetramine, and tetraethylenepentamine. Sulfur is particularly preferred. The addition amount of the vulcanizing agent is preferably from 0.1 to 5 parts by weight, more preferably from 0.2 to 2 parts by weight, particularlypreferably from 0.5 to 1.5 parts by weight, based on 100 parts by weight of the solid matter of the latex. If the amount of the vulcanizing agent is too small, the resulting tensile strength and contact-state-sustaining performance can tend to be poor. If the amount is too large, the resulting feeling can tend to be poor.

Applicable examples of the vulcanization accelerator include those conventionally used for dip molding, such as dithiocarbamic acids including diethyldithiocarbamic acid, dibutyldithiocarbamic acid, di-2-ethylhexyldithiocarbamic acid, dicyclohexyldithiocarbamic acid, diphenyldithiocarbamic acid, and dibenzyldithiocarbamic acid, and zinc salts thereof; and 2-mercaptobenzothiazole, zinc 2-mercaptobenzothiazole, 2-mercaptothiazoline, dibenzothiazyl disulfide, 2-(2,4-dinitrophenylthio)benzothiazole, 2-(N,N-diethylthiocarbamoylthio)benzothiazole, 2-(2,6-dimethyl-4-morpholinothio)benzothiazole, 2-(4'-morpholinodithio)benzothiazole, 4-morpholinyl-2-benzothiazyl disulfide, and 1,3-bis(2-benzothiazyl-mercaptomethyl)urea. Particularly preferred are zinc diethyldithiocarbamate, zinc dibutyidithiocarbamate, 2-mercaptobenzothiazole, and zinc 2-mercaptobenzothiazole. One of these vulcanization accelerators may be used alone, or two or more of these vulcanization accelerators may be used in combination.

The addition amount of the vulcanization accelerator is preferably from 0.1 to 5 parts by weight, more preferably from 0.1 to 1 part by weight, particularly preferably from 0.2 to 0.9 parts by weight, based on 100 parts by weight of the solid matter of the latex. If the amount of the vulcanization accelerator is too small, the resulting tensile strength and contact-state-sustaining performance can tend to be poor. If the amount is too large, the resulting feeling can tend to be poor.

The dip-molding composition of the invention may further contain zinc oxide.

The addition amount of zinc oxide is preferably at most 10 parts by weight, more preferably from 0.2 to 2 parts by weight, still more preferably from 0.3 to 1.5 parts by weight, based on 100 parts by weight of the solid matter of the latex. If zinc oxide is added in such a range, the resulting dip-molded product can have a good balance of tensile strength, feeling and contact-state-sustaining performance.

If desired, the dip-molding composition of the invention may further contain a conventional additive such as a pH adjustor, a thickening agent, an age resistor or antioxidant, a dispersing agent, a pigment, a filler, and a softener. Any other latex such as a natural rubber latex and an isoprene rubber latex may be used together, as long as the object of the invention is not lost.

The solids content of the dip-molding composition of the invention is preferably from 20 to 40% by weight, more preferably from 25 to 35% by weight.

The dip-molding composition of the invention preferably has a pH of 8 to 10, more preferably of 8.5 to 9. If the pH of the dip-molding composition is in such a range, the resulting dip-molded product can have a good balance of tensile strength and contact-state-sustaining performance.

It is preferred that the dip-molding composition should be aged before used in dip molding. Aging conditions may be selected as needed but are generally from 25 to 40°C and from 12 hours to 3 days.

The dip-molded product of the invention is produced by dip molding of the dip-molding composition as described above.

Any conventionaldip-molding method may be used. Examples of such a dip-molding method include a direct dipping method, an anode coagulant dipping process and a Teague coagulant dipping process. The anode coagulant dipping process is particularly preferred because it can easily provide a dip-molded product having a uniform thickness.

For example, the anode coagulant dipping process may include the processes of : dipping a mold into a coagulant solution to allow the coagulant to adhere to the surface of the mold; and then dipping the mold into the dip-molding composition to form a dip-molded layer on the surface of the mold.

Examples of the coagulant include a metal halide such as barium chloride, calcium chloride, magnesium chloride, zinc chloride, and aluminum chloride; a nitrate such as barium nitrate, calciumnitrate and zinc nitrate; an acetate such as bariumacetate, calcium acetate and zinc acetate; and a sulfate such as calcium sulfate, magnesium sulfate and aluminum sulfate. Calcium chloride and calcium nitrate are particularly preferred.

The coagulant is generally used in the form of a solution in water, an alcohol or a mixture thereof. The concentration of the coagulant is generally from 5 to 70% by weight, preferably from 20 to 50% by weight.

The resulting dip-molded layer is generally heat-treated for vulcanization.

Before the heat treatment, dipping into water, preferably warm water at a temperature of 30 to 70°C, may be performed for a time period of about 1 to 60 minutes to remove water-soluble impurities (such as an excess of the emulsifier or the coagulant) . This process may be performed after the heat treatment of the dip-molded layer but is preferably performed before the heat treatment so that water-soluble impurities can efficiently be removed.

The resulting dip-molded layer may be heat-treated at a temperature of 100 to 150°C for a time period of 10 to 120 minutes for vulcanization. The heating method may be external heating by infrared rays or hot air or internal heating by high-frequency waves. Heating by hot air is particularly preferred.

The vulcanized dip-molded layer is detached from the mold so that a dip-molded product is obtained. The detachment method may be peeling off from the mold by hand or peeling off by water pressure or compressed air pressure.

The detachment process may be followed by heat treatment at a temperature of 60 to 120°C for a time period of 10 to 120 minutes.

Any surface treatment layer may also be formed on the inside surface and/or the outside surface of the dip-molded product.

According to the invention, a dip-molded product can easily be produced which will have a stress of at most 3 MPa and a tensile strength of at least 20 MPa when extended by 300% and will have a stress retention rate of more than 50% 6 minutes after extended by 100%.

The dip-molded product of the invention can have a thickness of about 0.1 to about 3 mm and is particularly suitable for a thin product with a thickness of 0.1 to 0.3 mm. Examples of such a product include medical care goods such as nipples for feeding bottles, droppers, tubes, and water pillows; toys and sporting goods such as balloons, dolls and balls; industrial goods such as pressure-molding bags and gas storage bags; gloves for surgery, housework, agriculture, fishing industry, and industries; and finger stalls. The gloves may be of a supported type or an unsupported type. In particular, the product of the invention is suited for thin surgery gloves.

### (Examples)

The invention is described in more detail in the examples below. It should be noted that "%" and "part or parts" as used in the examples are by weight unless otherwise stated.

### [Methods for Evaluation]

### (Degree of Polymerization Conversion of Acrylonitrile in Polymerization System)

A part of the polymerization reaction liquid was sampled and measured for the amount of the unreacted acrylonitrile by gas chromatography analysis. The measured amount and the addition amount of acrylonitrile were used for calculation of the ratio of the amount of the acrylonitrile converted into the copolymer to the addition amount of acrylonitrile.

### (Content of Methyl Ethyl Ketone-Insoluble Components in Copolymer Latex)

The copolymer latex adjusted with a 5% aqueous ammonia solution to have a pH of 8.5 and a solids concentration of 30%, was poured and extended on a glass plate with a frame and then allowed to stand at a temperature of 23°C and a relative humidity of 50% for 48 hours to form a dry film with a thickness of 1 mm. Thereafter, 0.3 g of the dry film was placed in an 80 mesh metal gauze case and immersed in 100 ml of methyl ethyl ketone at 20°C for 48 hours. The film remaining in the metal gauze case was dried at 100°C under reduced pressure. The residual rate was calculated so that the content (%) of the methyl ethyl ketone-insoluble components was determined.

### (Preparation of Test Pieces for Evaluation of Physical Properties of Dip-Molded Products)

According to ASTM D412, a rubber glove-shaped dip-molded product was punched with a dumbbell die (Die-C), giving test pieces.

### (Stress at 300% Extension)

The test piece was tensioned at a tensile rate of 500 mm/minute in a Tensilon universal testing machine (RTC-1225A manufactured by ORIENTEC Co., LTD), and the tensile stress was measured when the elongation percentage was 300%. The smaller the value, the better the feeling of the product. A value of 3 MPa is generally preferred.

### (Tensile Strength)

The test piece was tensioned at a tensile rate of 500 mm/minute in the Tensilon universal testing machine, and the tensile strength was measured immediately before break.

### (Elongation at Break)

The test piece was tensioned at a tensile rate of 500 mm/minute in the Tensilon universal testing machine, and the elongation was measured immediately before break.

### (Stress Retention Rate: (%))

The test piece was extended in the Tensilon universal testing machine, and the tensile stress (Md0) was measured immediately after the elongation percentage reached 100%. The test piece was held for 6 minutes with the 100% elongation percentage, and then the tensile stress (Md6) was measured. Md6 was divided by Md0 to produce the stress retention rate. The higher the stress retention rate, the better the contact-state-sustaining performance.

### (Organic Solvent Resistance of Dip-Molded Product)

The resulting dip-molded product was cut into a circular disc piece with a diameter of 2 cm (R1). The test piece was immersed in 100 ml of an organic solvent for 48 hours, and then the diameter (R2) of the swollen film was measured. The value produced by dividing R2 by R1 was squared, and the calculated value was defined as the degree of swelling by organic solvent. A smaller value means better resistance to organic solvents.

### (Example 1)

To a pressure-tight polymerization reaction vessel were added 18 parts of acrylonitrile, 5.25 parts of methacrylic acid, 71 parts of 1, 3-butadiene, 0.3 parts of a molecular weight modifier of tert-dodecyl mercaptan (also abbreviated as "TDM"), 150 parts of deionized water, 2. 5 parts of sodium dodecylbenzenesulfonate, 0.2 parts of potassium persulfate, and 0.1 parts of sodium ethylenediaminetetraacetate, and then the polymerization reaction was initiated when the temperature in the system was set at 37°C.

When the degree of polymerization conversion of the total of the monomers in the polymerization reaction system reached 60% (at which the degree of polymerization conversion of the acrylonitrile in the polymerization system was 65%), 4 parts of acrylonitrile and 1.75 parts of methacrylic acid were added to the polymerization reaction system. The polymerization reaction was further continued, and the temperature was raised to 40°C when the degree of polymerization conversion reached 80%. While the temperature was kept at 40°C, the polymerization reaction was continued until the degree of polymerization conversion reached 95%. Thereafter, 0.1 parts of diethylhydroxylamine was added to terminate the polymerization reaction.

The unreacted monomers were removed by distillation from the resulting copolymer latex, and then a 5% aqueous ammonia solution was added thereto to adjust the solids concentration and pH, so that a copolymer latex A with a solids concentration of 45% and a pH of 8.5 (named copolymer latex A) was obtained. The content of MEK-insoluble components in copolymer latex A was measured and is shown in Table 1.

After 7.04 parts of a vulcanizer dispersion, which was prepared by mixing 1 part of sulfur, 0.5 parts of zinc oxide, 0.5 parts of zinc diethylcarbamate, 1.5 parts of titanium oxide, 0.02 parts of potassium hydroxide, and 3.52 parts of water, was mixed with 222.22 parts of copolymer latex A (solids content of 100 parts), an appropriate amount of deionized water and a 5% aqueous ammonia solution were added thereto so that a dip-molding composition with a solids concentration of 30% and a pH of 8.5 was obtained.

A glove-shaped mold was dipped for 1 minute in an aqueous coagulant solution, which was prepared by mixing 25 parts of calcium nitrate, 0.05 parts of a nonionic emulsifier of polyoxyethylene octylphenyl ether and 75 parts of water, and pulled up from the solution. Thereafter, the mold was dried at 50°C for 3 minutes so that the coagulant was allowed to adhere to the glove mold.

The glove mold with the coagulant adhering was then dipped for 1 minute in the dip-molding composition and pulled up from it. Thereafter, the glove mold having a dip-molded layer was dried at 25°C for 3 minutes and then immersed in warm water at 40°C for 3 minutes so that water-soluble impurities were leached. The glove mold was then dried at 80°C for 20 minutes and subsequently heat-treated at 120°C for 20 minutes so that the dip-molded layer was vulcanized. Finally, the vulcanized dip-molded layer was peeled off from the glove mold so that a glove-shaped dip-molded product with a thickness of about 0.1 mm was obtained. The results of evaluating the dip-molded product are shown in Table 1.

### (Examples 2 and 3)

Copolymer latexes (named copolymer latexes B and C) were obtained using the process of Example 1 except that the initial addition amounts of the monomer mixture and TDM at the time of starting the polymerization reaction and the amounts of acrylonitrile and methacrylic acid added after the initiation of the polymerization reaction were changed as shown in Table 1. The content of MEK-insoluble components in each of copolymer latexes B and C was measured. Each result is shown in Table 1.

A dip-molded product was obtained using the process of Example 1 except that each of copolymer latexes B and C was used in place of copolymer latex A. The results of evaluating the dip-molded product are shown in Table 1.

### (Comparative Example 1)

A copolymer latex (named copolymer latex D) was obtained using the process of Example 1 except that the initial addition amount of TDM was changed to 0.7 parts. The content of MEK-insoluble components in copolymer latex D was measured and is shown in Table 1.

A dip-molded product was obtained using the process of Example 1 except that copolymer latex D was used in place of copolymer latex A. The results of evaluating the dip-molded product are shown in Table 1.

### (Comparative Example 2)

A copolymer latex (named copolymer latex E) was obtained using the process of Example 1 except that the composition of the added components was as shown in Table 1 and that neither acrylonitrile nor methacrylic acid was added during the process. The content of MEK-insoluble components in copolymer latex E was measured and is shown in Table 1.

A dip-molded product was obtained using the process of Example 1 except that copolymer latex E was used in place of copolymer latex A. The results of evaluating the dip-molded product are shown in Table 1.

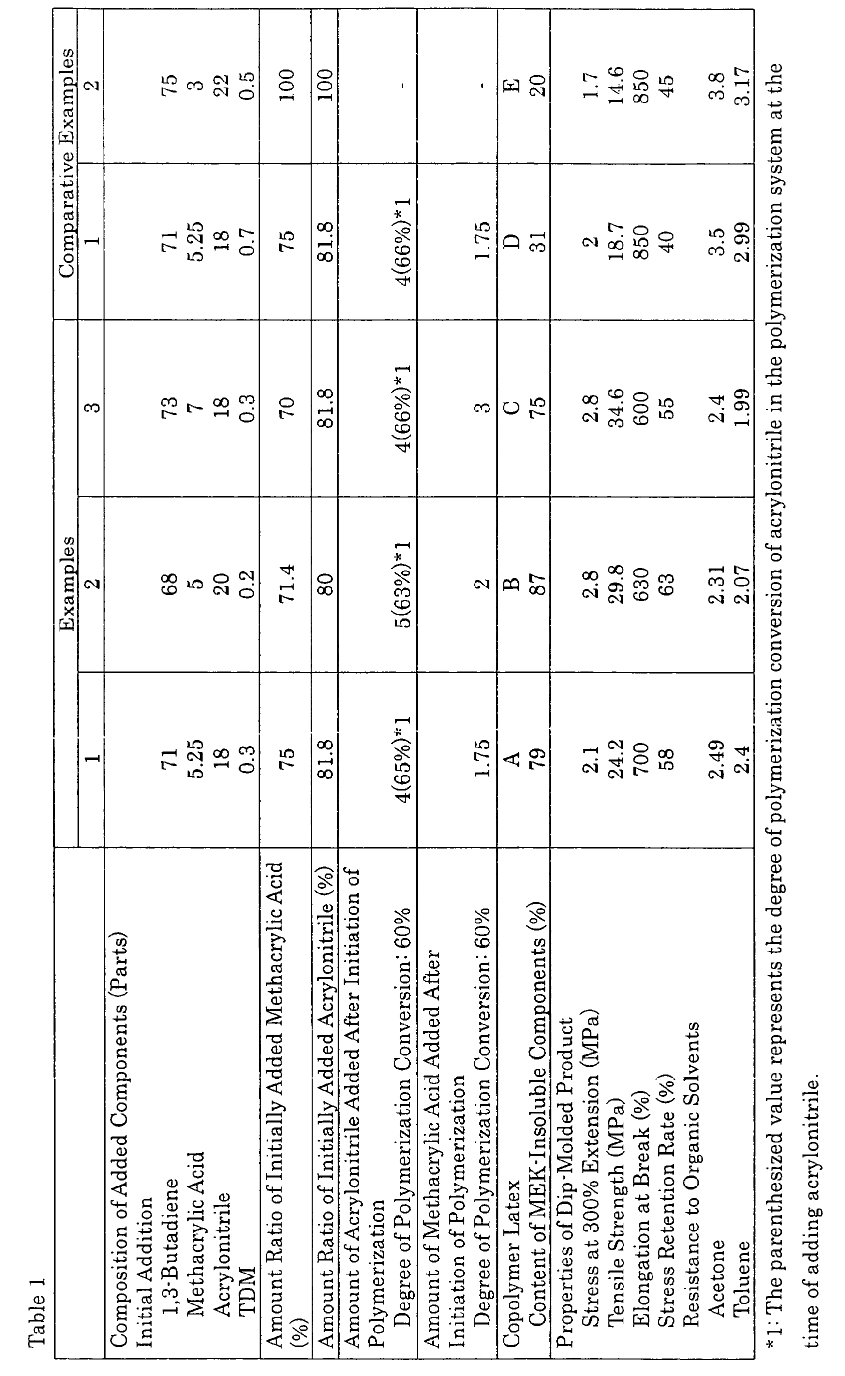

The following is apparent from Table 1.

The dip-molded product produced with copolymer latex D with a lower content of MEK-insoluble components than the range defined according to the invention has good feeling but is poor in tensile strength, stress retention rate and resistance to organic solvents (Comparative Example 1).

The dip-molded product produced with copolymer latex E with a lower amount of methacrylic acid and a lower content of MEK-insoluble components than the range defined according to the invention has good feeling but is poor in tensile strength, stress retention rate and resistance to organic solvents

### (Comparative Example 2).

In contrast to the comparative examples, the dip-molded product produced with each of copolymer latexes A to C according to the invention has good resistance to organic solvents, good feeling, sufficient tensile strength and high contact-state-sustaining performance (Examples 1 to 3).

## Claims

1. A copolymer latex for use in dip molding, which satisfies the following conditions:
(1) the copolymer is produced by copolymerization of 100 parts by weight of a monomer mixture (A) comprising 45 to 85 parts by weight of a conjugated diene monomer, 10 to 40 parts by weight of an ethylenic unsaturated nitrile monomer, 5 to 15 parts by weight of an ethylenic unsaturated acid monomer, and 0 to 20 parts by weight of any other ethylenic unsaturated monomer copolymerizable therewith;
(2) the content of methyl ethyl ketone-insoluble components in the copolymer is from 60% to 95% by weight; and
(3) the copolymer is produced by the following processes of:
(I) initiating a copolymerization reaction using a monomer mixture (a) that comprises at least 80% by weight of the total amount of the conjugated diene monomer, 50 to 90% by weight of the total amount of the ethylenic unsaturated nitrile monomer, 40 to 90% by weight of the total amount of the ethylenic unsaturated acid monomer, and at least 80% by weight of the total amount of the other ethylenic unsaturated monomer with respect to the respective components of the monomer mixture (A);
(II) adding the remainder of the ethylenic unsaturated nitrile monomer and the remainder of the ethylenic unsaturated acid monomer when the degree of polymerization conversion of the monomer mixture (a) is in the range from 5% to 95% by weight, wherein the remainders are a part of the monomer mixture (A) but not included in the monomer mixture (a); and
(III) also performing and completing addition of the remainder of the conjugated diene monomer and the remainder of the other ethylenic unsaturated monomer copolymerizable therewith by the time that the polymerization reaction is stopped.

2. The copolymer latex for use in dip molding according to claim 1, wherein the remainder of the ethylenic unsaturated nitrile monomer is added to the polymerization reaction system when the degree of polymerization conversion of the ethylenic unsaturated nitrile monomer in the polymerization reaction system is in the range from 40% to 95% by weight.

3. The copolymer latex for use in dip molding according to claim 1 or 2, wherein the remainder of the ethylenic unsaturated acid monomer is added to the polymerization reaction system when the degree of polymerization conversion of the total of the monomers in the polymerization reaction system is in the range from 20% to 80% by weight.

4. A composition for use in dip molding, comprising the copolymer latex for use in dip molding according to claim 1, a vulcanizing agent and a vulcanization accelerator.

5. A dip-molded product, which is produced by dip molding of the composition according to claim 4.
